(19)

**Europäisches Patentamt**
**European Patent Office**
**Office européen des brevets**

(11) **EP 4 624 609 A1**

(12) **EUROPEAN PATENT APPLICATION**
published in accordance with Art. 153(4) EPC

(43) Date of publication:
01.10.2025 Bulletin 2025/40

(21) Application number: 23894623.0

(22) Date of filing: 22.11.2023

(51) International Patent Classification (IPC):
$C22C\ 38/00^{(2006.01)}$ $C21D\ 8/12^{(2006.01)}$
$C22C\ 38/04^{(2006.01)}$ $C22C\ 38/60^{(2006.01)}$
$H01F\ 1/147^{(2006.01)}$

(52) Cooperative Patent Classification (CPC):
C21D 8/12; C22C 38/00; C22C 38/04; C22C 38/60;
H01F 1/147; Y02P 10/20

(86) International application number:
PCT/JP2023/041949

(87) International publication number:
WO 2024/111619 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2022 JP 2022186504

(71) Applicant: NIPPON STEEL CORPORATION
Chiyoda-ku
Tokyo 100-8071 (JP)

(72) Inventors:
• IWAKI, Masataka
Tokyo 100-8071 (JP)
• MORISHIGE, Nobusato
Tokyo 100-8071 (JP)
• KATAOKA, Takashi
Tokyo 100-8071 (JP)
• ATSUMI, Haruhiko
Tokyo 100-8071 (JP)
• TAKAHASHI, Masaru
Tokyo 100-8071 (JP)

(74) Representative: Vossius & Partner
Patentanwälte Rechtsanwälte mbB
Siebertstrasse 3
81675 München (DE)

(54) **GRAIN-ORIENTED ELECTROMAGNETIC STEEL SHEET**

(57) The shapes of the linear grooves formed for magnetic domain refinement and the Sa values of the surface roughness at the bottom surfaces of the groove inside parts and the side surfaces of the groove inside parts are controlled to within certain ranges whereby the noise is further reduced without detracting from the effect of reduction of core loss of the grain-oriented electrical steel sheet obtained.

Grain-oriented electrical steel sheet comprised of steel sheet containing, by mass%, Si: 2.50 to 4.50% and Mn: 0.01 to 0.15% and having a balance of Fe and impurities and having a steel sheet surface on which linear grooves extending in a direction forming a 0 to 30° angle with a direction perpendicular to rolling direction are formed at a 2 to 10 mm pitch, in which grain-oriented electrical steel sheet, a depth D of the grooves is 10 to 40 $\mu$m, a width W of the grooves is 20 to 200 $\mu$m, an $Sa_{bottom}$ value of surface roughness of a bottom surface of the groove inside part is more than 5.0 $\mu$m, and an $Sa_{side}$ value of surface roughnesses of side surfaces of the groove inside part is 1.0 to 5.0 $\mu$m.

Fig. 1

**Description**

FIELD

The present invention relates to grain-oriented electrical steel sheet.

BACKGROUND

Grain-oriented electrical steel sheet is steel sheet generally containing Si in 2 mass% to 5 mass% or so as a steel sheet constituent and having an orientation of crystal grains of the steel sheet integrated to a high degree to the {110}<001> orientation called the "Goss orientation". Grain-oriented electrical steel sheet is excellent in magnetic properties and, for example, is utilized as a core material for transformers and other stationary inductors, etc.

Various technical development efforts are under way for improving the magnetic properties of such grain-oriented electrical steel sheet. In particular, along with the recent demand for energy savings, further lower core loss is being sought from grain-oriented electrical steel sheet. For reducing the core loss of grain-oriented electrical steel sheet, it is useful to raise the integration degree of the orientation of the crystal grains of steel sheet to the Goss orientation in order to improve the magnetic flux density and decrease the hysteresis loss.

In grain-oriented electrical steel sheet used as a base material for a wound transformer, simultaneously with lower core loss, further lowering of noise is being sought. In order to reduce the core loss in electrical steel sheet, magnetic domain refinement is being performed, but in a wound transformer, stress relief annealing is performed in the production process, and thus in the case of performing magnetic domain refinement, a heatproof type technique for magnetic domain refinement would be necessary.

As a heatproof type technique for magnetic domain refinement, there is one in which regular grooves are formed in the steel sheet. For example, PTL 1 describes that by forming linear flaws at the steel sheet surface before or after decarburization annealing at a pitch of 5 mm or less with widths of 1 mm or less and depths of the Ra value of 0.3 to 5.0 $\mu$m and Rmax value of 10 $\mu$m or less, grain-oriented electrical steel sheet extremely excellent in core loss and excellent in coating adhesion is obtained.

PTL 2 describes grain-oriented electrical steel sheet having a steel sheet surface on which are formed grooves extending in a direction crossing the rolling direction and with a groove depth direction of the sheet thickness direction. The grooves formed are asymmetrical shapes based around the groove width centers in the groove width direction. That fact that by making the average depth of the grooves having such cross-sectional shapes, the arithmetic average height Ra of the roughness curve forming the contour of the groove bottom region of the grooves, and the average length RSm of the roughness curve elements forming the contours of the groove bottom region specific ranges, an effect of reduction of the core loss is obtained is disclosed.

PTLs 1 to 2 make various proposals regarding the techniques of magnetic domain refinement for reducing core loss, but do not propose anything relating to noise reduction.

[CITATIONS LIST]

[PATENT LITERATURE]

[PTL 1] Japanese Unexamined Patent Publication No. 1-198429
[PTL 2] WO2016-171130

SUMMARY

[TECHNICAL PROBLEM]

The grain-oriented electrical steel sheet used as the base material for wound transformers is being required to be made further lower in noise along with being made lower in core loss. Heatproof type magnetic domain refinement is generally being performed for forming linear shaped grooves, but at the present, a sufficient noise reduction effect has not been obtained.

One of the reasons for noise is believed to be that when the domain structure changes at the time of excitation due to the deviation in the crystal orientation (when the magnetic moment changes the orientation), the crystal lattice stretches and contracts (magnetostriction). The magnetostriction is amplified and becomes vibration which in turn becomes noise.

Therefore, the present invention has as its object to reduce the core loss of grain-oriented electrical steel sheet and to realize a further lowering of noise.

[SOLUTION TO PROBLEM]

The inventors engaged in intensive studies on moderating the changes in domain structure at the time of excitation so as to reduce the noise.

The change in domain structure at the time of excitation is greatly affected by movement of the stripe domains - a main domain structure of grain-oriented electrical steel sheet. If there are no factors obstructing movement of domain walls between stripe domains, movement of domain walls (in other words, movement of stripe domains) becomes smooth and as a result the movement of the domains sharply changes (no longer gently changes) and the noise becomes greater. For this reason, by obstructing movement of the domain walls, noise can be reduced. On the other hand, if movement of the domain walls is smooth, the core loss can be reduced.

In this case, as a factor obstructing movement of domain walls, a change in the cross-sectional area of the grooves may be mentioned. (Grooves extend in the length direction, so at one cross section and a separate cross section, sometimes the cross-sectional area will differ. For example, in a groove extending from a near side to a far side, sometimes the cross-sectional area will differ between the near side cross section and the far side cross section. The "cross section" referred to in this case is the cross section vertical to the longitudinal direction or direction of extension of the groove.) It is thought that the more the cross-sectional area of a groove does not change, i.e., the more uniform the projected shape of the groove cross section from the near side to the far side of the groove, in other words, the smaller the surface roughness of the groove inside part (also referred to as the "surface roughness"), the smoother movement of the domain walls becomes. Conversely, it is thought that the greater the surface roughness, the more movement of the domain walls is obstructed.

In this case, the Ra which had been used in evaluation of the surface shape (surface roughness) inside a groove in the past such as described in PTLs 1 to 3 expresses the linear roughness. Typically, this is evaluated at only one cross section of a groove, so sometimes the change in the cross-sectional area of a groove (from a near side to a far side of a groove) cannot be sufficiently evaluated. Specifically, sometimes even if the linear roughness Ra was increased, movement of the domain walls could not be obstructed and noise could not be decreased. As opposed to this, the inventors found that by using the surface roughness Sa for evaluation instead of the linear roughness Ra, it is possible to sufficiently evaluate the cross-sectional area of a groove, the surface roughness Sa can be increased to obstruct the movement of the domain walls and, as a result decrease the noise. In other words, when evaluating the surface shape (surface roughness) of a groove inside part, by using the surface roughness Sa instead of the conventional linear roughness Ra, it is possible to more reliably decrease the noise.

However, if movement of the domain walls is obstructed too much, the core loss is detrimentally affected, so a suitable obstructing factor is necessary. Therefore, the inventors came up with the idea of obstructing the movement of the domain walls required for reducing noise by roughening the surface roughness of the bottom surface of the groove inside part of a groove. In other words, it is possible to similarly reduce noise even in the case of making the side surfaces of the groove inside part (also referred to as the "wall surfaces" or "side surfaces" of the groove) rougher, but the detrimental effect on the core loss is great, so the inventors came up with the idea of roughening only the bottom surface of the groove inside part and flattening the side surfaces of the groove inside part for lowering the core loss.

Further, the inventors discovered that to form a groove having the desired surface roughness Sa, it is useful to control the production conditions from the following viewpoint. More specifically, they discovered that by using a special pickling solution for pickling before forming a groove, it is possible to make the heat transfer coefficient of the precipitates at the steel sheet surface diverge from the specific heat and heat transfer coefficient of the base iron. Further, they discovered that by promoting roughening of the bottom surface of the groove inside part by the difference in heat transfer at the time of forming a groove by lasering, etc., a noise reduction effect can be obtained. In addition, they discovered that that at the time of lasering or otherwise application of a heat source, it is possible to use a blower to blow air by a 100 m/s or more rate so that the constituents (dust) melted or vaporized from the steel sheet due to the heat source float up and can be kept from redepositing on the steel sheet, laser, etc. and this promotes flattening of the side surfaces of the groove inside part and has a core loss reduction effect.

The present invention was completed based on the above findings. In the present invention, by controlling the shapes of the linear grooves formed for magnetic domain refinement and the Sa values of the surface roughness at the bottom surfaces of the groove inside parts and the side surfaces of the groove inside parts to within certain ranges, the core loss of the grain-oriented electrical steel sheet is decreased and along with this further reduction of noise is realized.

The gist of the present invention is grain-oriented electrical steel sheet comprised of steel sheet containing, by mass%, Si: 2.50 to 4.50% and Mn: 0.01 to 0.15% and having a balance of Fe and impurities and having a steel sheet surface on which linear grooves extending in a direction forming a 0 to 30° angle with a direction perpendicular to rolling direction are formed at a 2 to 10 mm pitch, in which grain-oriented electrical steel sheet, a depth D of the grooves is 10 to 40 $\mu$m, a width W of a groove inside part is 20 to 200 $\mu$m, an Sa value of surface roughness of a bottom surface of the groove inside part is more than 5.0 $\mu$m, and an Sa value of surface roughnesses of side surfaces of the groove inside part is 1.0 to 5.0 $\mu$m.

It should be noted that the MnS of the bottom surface of the groove inside part may also not be replaced by sulfides of one or more elements selected from the group comprising Cu, Hg, Ag, Pb, Cd, Co, Zn, and Ni and may also not be coated by one or more elements selected from the group comprising Cu, Hg, Ag, Pb, Cd, Co, Zn, and Ni.

Below, in this Description, the "one or more elements selected from the group comprising Cu, Hg, Ag, Pb, Cd, Co, Zn, and Ni" will be simply referred to as "Cu, etc." and the "sulfides of one or more elements selected from the group comprising Cu, Hg, Ag, Pb, Cd, Co, Zn, and Ni" will be simply referred to as "sulfides of Cu, etc."

[ADVANTAGEOUS EFFECTS OF INVENTION]

According to the present invention, in a groove formed by lasering, by roughening the bottom surface of the groove inside part (by the surface roughness Sa being limited to predetermined ranges), movement of the domain walls is obstructed and noise is reduced, while by flattening the side surfaces of the groove inside part (by the surface roughness Sa being limited to a predetermined range), movement of the domain walls becomes smooth and the effect of reduction of the core loss can be obtained.

BRIEF DESCRIPTION OF DRAWINGS

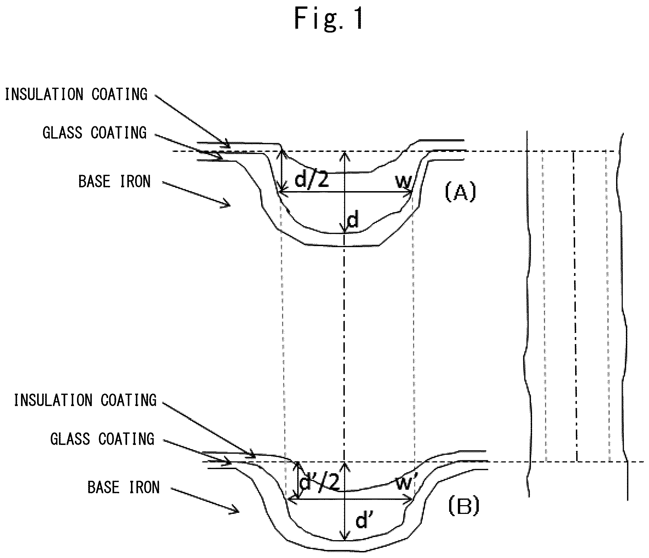

FIG. 1 is a cross-sectional view of a groove of grain-oriented electrical steel sheet of the present invention.

DESCRIPTION OF EMBODIMENTS

Below, preferred embodiments of the present invention will be explained in detail. It should be noted that, unless particularly indicated otherwise, for numerical values A and B, the expression "A to B" shall mean "A or more and B or less." In such expressions, when only the numerical value B is given a unit, that unit shall also be deemed to apply to the numerical value A.

[Chemical Composition of Steel Sheet]

First, the chemical composition of the steel sheet used for the grain-oriented electrical steel sheet according to the invention will be explained.

It should be noted that, below, unless otherwise particularly indicated, the expression of "%" shall indicate "mass%." Further, the balance of steel sheet other than the elements explained below is comprised of Fe and impurities.

The steel sheet used for the grain-oriented electrical steel sheet according to the present invention includes constituents preferable for controlling the sheet to a texture in which the crystal orientation is integrated to the {110}<001> orientation (Goss orientation) and contains at least Si: 2.50 to 4.50% and Mn: 0.01 to 0.15%.

(Si: 2.50 to 4.50%)

The content of Si (silicon) is 2.50 to 4.50%. Si raises the electrical resistance of steel sheet and thereby reduces the eddy current loss - one of the causes of core loss. If the content of Si is less than 2.50%, it becomes difficult to sufficiently suppress the eddy current loss of the final grain-oriented electrical steel sheet, so this is not preferable. If the content of Si is more than 4.50%, the workability of the grain-oriented electrical steel sheet falls, so this is not preferable. Therefore, the content of Si is 2.50 to 4.50%, preferably is 2.70 to 4.00%.

(Mn: 0.01 to 0.15%)

The content of Mn (manganese) is 0.01 to 0.15%. Mn forms the inhibitors MnS and MnSe, etc. affecting the secondary recrystallization. If the content of Mn is less than 0.01%, the absolute amounts of MnS and MnSe for causing secondary recrystallization are not reached, so this is not preferable. If the content of Mn is more than 0.15%, at the time of slab heating, dissolution of Mn becomes difficult, so this is not preferable. Further, if the content of Mn is more than 0.15%, the precipitated size of the inhibitors MnS and MnSe easily becomes coarser and the optimal size distribution as inhibitors is impaired, so this is not preferable. Therefore, the content of Mn is 0.01 to 0.15%, preferably is 0.03 to 0.13%.

The constituents other than Si and Mn can be the constituents contained in ordinary grain-oriented electrical steel sheet.

For example, as constituents other than Si and Mn, by mass%, C: 0.085% or less, acid soluble Al: 0.065% or less, N: 0.012% or less, Cr: 0.30% or less, Cu: 0.400% or less, P: 0.500% or less, Sn: 0.300% or less, Sb: 0.300% or less, Ni:

1.000% or less, S: 0.015% or less, Se: 0.015% or less, and Bi: 0.020% or less can be contained. It should be noted that the contents of these constituents are the contents in the final products after purification annealing, etc., so lower limits are not prescribed. 0% is also possible.

The balance besides the above constituents of the steel sheet is comprised of Fe and impurities. In this case, "impurity" elements indicate constituents included in the raw materials or constituents entering in the process of production and not intentionally included in the steel sheet.

For magnetic domain refinement, the steel sheet surface is formed with grooves extending in a direction crossing the rolling direction and with a depth direction comprised of the sheet thickness direction. It should be noted that the grooves need only be provided so as to cross the rolling direction. The direction of extension of the grooves and the rolling direction need not necessarily be orthogonal. The grooves are provided in a direction forming a 0 to 30° angle with the direction perpendicular to rolling direction. Further, the grooves need not necessarily have straight line shapes when viewed from the sheet thickness direction (when viewing grooves planarly) and may also have bow shapes. The shapes of the grooves explained below are measured by removing from the final product at least the glass coating and insulating coating of the groove inside parts by pickling, etc. It should be noted that a groove may also include a groove inside part. The "groove inside part" in this case is a region defined by the contours of the groove and recessed from the surface of the steel sheet. As explained later, a groove may also include wall surfaces of the groove inside part (also called "side surfaces") and a bottom surface of the groove inside part.

The above grooves are formed at the steel sheet surface at a 2 to 10 mm pitch. If the pitch of the grooves is less than 2 mm, the effect of magnetic domain refinement becomes saturated and the effect of reduction of the eddy current loss becomes harder to obtain, while strain causes the hysteresis loss to increase, so the core loss ends up increasing. This is therefore not preferable. If the pitch of the grooves is more than 20 mm, the effect of magnetic domain refinement decreases, so the effect of improvement of the core loss becomes insufficient. This is therefore not preferable. The pitch of the grooves is 3 to 7 mm.

FIG. 1 is a cross-sectional view of a groove of electrical steel sheet of the present invention. In this cross-sectional view, the groove inside part is shaped close to a trapezoid, but the groove inside part may also be bow shaped. In one embodiment of the electrical steel sheet of the present invention, the depth D of the grooves is 10 $\mu$m to 40 $\mu$m in range. If the depth D is less than 10 $\mu$m, the amount of formation of magnetic poles from the groove inside parts becomes smaller and a sufficient effect of reduction of core loss is not obtained. If the depth D is more than 40 $\mu$m, the magnetic domains are refined, but the drop in magnetic flux density due to the formation of the grooves becomes greater and a sufficient core loss reduction effect cannot be obtained. The preferable depth is 15 $\mu$m to 30 $\mu$m.

(Measurement of Depth D of Grooves)

The method of measurement of the "depth D" according to the present invention is as follows: Any one place of the electrical steel sheet is selected. Between the maximum depths of the cross-sections (A) and (B) of the groove at any two points 3 mm apart at the near side and far side in the direction of extension of the groove shown in the cross-sectional view of the groove of FIG. 1, the deeper one is measured as the depth "d" and the shallow one as the depth "d'" using a laser microscope (3D laser microscope using confocal optical system using pinhole). The depth D is the average value of these values.

The "width W of the grooves" referred to in the invention encompasses the parts shown by "w," "w'" in FIG. 1. The width W of the grooves is 20 $\mu$m to 200 $\mu$m in range. If the width W is less than 20 $\mu$m, the magnetic flux leaking from a wall surface of a groove inside part (side surface of groove inside part) enters the wall surface of the groove inside part at the opposite side (side surface of groove inside part), the amount of formation of magnetic poles becomes smaller, and a sufficient effect of reduction of core loss is not obtained. If the width W is more than 200 $\mu$m, the effect of reduction of core loss becomes saturated, the laser power required for forming the grooves becomes greater, and the production costs just swell. The preferable width W is 30 to 100 $\mu$m.

(Measurement of Width W of Grooves)

The method of measurement of the "width W of the grooves" according to the present invention is as follows: Any one place of the electrical steel sheet is selected. Between the widths where the depths of the groove of the cross-sections (A) and (B) of the groove at any two points 3 mm apart at the near side and far side in the direction of extension of the groove shown in the cross-sectional view of the groove of FIG. 1 become half of the maximum depth "d" or "d'", the broader one is measured as "w" and the narrower one as "w'" using a laser microscope (3D laser microscope using confocal optical system using pinhole). The width W is the average value of these values.

The "surface roughness Sa values of the bottom surface of a groove inside part and the side surfaces of a groove inside part" referred to in the present invention are the values of the arithmetic average height Sa of the surface (3D surface) roughness of the bottom surface of the groove inside part and the side surfaces of the groove inside parts between the two points (A) and (B) in FIG. 1. In particular, the surface roughness of the bottom surface of the groove inside part is sometimes called "$Sa_{bottom}$," while the surface roughness of the side surfaces of the groove inside part is sometimes called "$Sa_{side}$." The arithmetic average height Sa of the surface (3D surface) roughness is defined as in the Japan Industrial Standard JISB0681-6: 2014 (ISO25178-6: 2010) "Geometrical product specifications (GPS) -Surface texture: Areal - Part 6: Classification of methods for measuring surface texture".

In the grain-oriented electrical steel sheet of the present invention, $Sa_{bottom}$ of the bottom surface of the groove inside part is more than 5.0 $\mu$m, preferably 6.0 $\mu$m or more. The upper limit is 10.0 $\mu$m or less, preferably 8.0 $\mu$m or less. If $Sa_{bottom}$ is 5.0 $\mu$m or less, the noise reduction effect is not obtained. If $Sa_{bottom}$ is more than 10.0 $\mu$m, the effect of increase of the core loss (hysteresis loss) becomes greater and a low noise and low core loss grain-oriented electrical steel sheet cannot be obtained. Further, in the grain-oriented electrical steel sheet of the present invention, the MnS and other precipitates at the bottom surface of the groove inside part need not be replaced with sulfides of Cu, etc. or coated by Cu, etc. In this case, "the MnS and other precipitates at the bottom surface of the groove inside part are not be replaced with sulfides of Cu, etc. or coated by Cu, etc." means the replacement rate by which the MnS and other precipitates are replaced with sulfides of Cu, etc. is 0% or the coating rate by which MnS is coated by Cu, etc. is 0%.

In the grain-oriented electrical steel sheet of the present invention, $Sa_{side}$ of the side surfaces of the groove inside part is 1.0 to 5.0 $\mu$m, preferably 1.5 to 4.0 $\mu$m, more preferably 2.0 to 3.0 $\mu$m. If $Sa_{side}$ is less than 1.0 $\mu$m, the magnetic properties are not a problem, but realization is difficult in terms of production technology. If $Sa_{side}$ is more than 5.0 $\mu$m, movement of domain walls no longer becomes smooth, the hysteresis loss increases, and a sufficient effect of reduction of the core loss cannot be obtained.

In the grain-oriented electrical steel sheet of the present invention, the reason why $Sa_{bottom}$ of the bottom surface of the groove inside part becoming more than 5.0 $\mu$m and making the surface roughness $Sa_{side}$ of the side surfaces of the groove inside part 1.0 to 5.0 $\mu$m in range enables both lower core loss and lower noise to be realized is thought to be that controlling the surface roughness $Sa_{side}$ of the side surfaces of the groove inside part enables an effect of reducing core loss to be obtained and that controlling the surface roughness $Sa_{bottom}$ of the bottom surface of the groove inside part enables a noise reduction effect to be obtained.

It should be noted that, in one embodiment of the present invention, the MnS and other precipitates at the bottom surface of the groove inside part need not be replaced with sulfides of Cu, etc. or coated by Cu, etc. In the case of replacing or coating MnS, etc. by Cu, etc., it is possible to make the heat transfer coefficient of the steel sheet surface layer constant. In the case of forming grooves by lasering or another heat source, the heat becomes easily evenly transferred, therefore the surface roughness Sa of the inside part is limited to a predetermined range. At a place where the heat transfer coefficient is not constant, heat becomes harder to evenly be transferred, so there the surface roughness Sa of the groove inside part easily becomes greater. Due to this, increasing the surface roughness at the bottom surface of the groove inside part can be more readily realized than at the side surfaces of the groove inside part.

(Method of Measurement of Surface Roughnesses Sa of Bottom Surface of Groove Inside Part and Side Surfaces of Groove Inside Part)

A laser microscope (3D laser microscope using confocal optical system using a pinhole) was used to measure the Sa's. Any one groove of the electrical steel sheet is selected. The range of a width of 0.5 $\mu$m at one side (1.0 $\mu$m at the two sides) in the right angle direction from the line connecting the points "d", "d'" of maximum depth of the cross-sections (A) and (B) of the groove at any two points 3 mm separated at the near side and far side in the direction of extension of the groove shown in the cross-sectional view of the groove of FIG. 1 (and the right angle direction from the sheet thickness of the electrical steel sheet) is made the bottom surface of the groove inside part. The asperity of the bottom surface of the groove inside part is made the surface roughness $Sa_{bottom}$ of the bottom surface of the groove inside part of the present invention. Further, the ranges of distances of 0.5 $\mu$m at one side (1.0 $\mu$m at the two sides) in the right angle directions from the lines connecting points (d/2, d'/2) at the same left and right sides from the maximum depths "d", "d'" of the two groove cross-sections (A) and (B) in the points at 1/2 depths of the maximum depths (and sheet width direction of the electrical steel sheet) are made side surfaces of the groove inside part. The $Sa_{left}$ and $Sa_{right}$ of the asperities of the side surfaces of the groove inside part are derived and the average value of these values is made the $Sa_{side}$ of the side surfaces of the groove inside part.

For reference, the linear surface roughness Ra will be explained. The "linear surface roughness Ra values of the bottom surface of the groove inside part and the side surfaces of a groove inside part" are the values of the arithmetic average heights Ra of the roughness curves at the bottom surface of the groove inside part and the side surfaces of the groove inside part between the two points (A) and (B) in FIG. 1. The arithmetic average height Ra of the roughness curve is defined as in Japan Industrial Standard JIS B 0601 (2013).

(Method of Measurement of Surface Roughnesses Ra of Bottom Surface of Groove Inside Part and Side Surfaces of Groove Inside Part)

A laser microscope (3D laser microscope using a confocal optical system using a pinhole) was used to measure the Ra's. Any one groove of the electrical steel sheet is selected. The asperity of the bottom surface of the groove inside part of the line connecting the points "d", "d'" of the maximum depths of the cross-sections (A) and (B) of any two points 3 mm apart at the near side and far side in the direction of the groove shown in the cross-sectional view of the groove of FIG. 1 is made the surface roughness $Ra_{bottom}$ of the bottom surface of the groove inside part of the present invention. Further, the $Ra_{left}$ and $Ra_{right}$ of the asperities of the side surfaces of the groove inside part of the lines connecting points at the same left and right sides across the maximum depths "d", "d'" of the two groove cross-sections (A) and (B) in the points (d/2, d'/2) becoming 1/2 depths of the maximum depths are derived and the average value of these values is made the $Ra_{side}$ of the side surfaces of the groove inside part.

[Method of Production of Grain-Oriented Electrical Steel Sheet]

The process of production of the grain-oriented electrical steel sheet of the present invention will be explained divided between the steps until obtaining the cold rolled steel sheet and the subsequent step of magnetic domain control.

[Steps Until Obtaining Cold Rolled Steel Sheet From Slab]

A slab containing, by mass%, Si: 2.50% to 4.50% and Mn: 0.01% to 0.15% and having a balance of Fe and impurities is hot rolled to obtain hot rolled steel sheet.

Next, this hot rolled steel sheet is pickled to obtain pickled sheet or else this hot rolled steel sheet is annealed to obtain hot rolled annealed sheet, then the hot rolled annealed sheet is pickled to obtain pickled sheet. The pickling solution used in this process contains one or more of Cu, Hg, Ag, Pb, Cd, Co, Zn, and Ni (also referred to as "Cu, etc."), the total of the concentrations of the elements is 0.0001 to 0.1000 mass% or less with respect to the pickling solution, and the pH is -1 or more and 5 or less. The temperature of the pickling solution is 15°C to 100°C, while the time period during which the steel sheet is dipped in the pickling solution is 5 seconds or more and 200 seconds are less. The pickling step enables pickled sheet to be obtained. This pickled sheet is cold rolled to obtain the cold rolled steel sheet.

[Chemical Composition of Slab]

The constituents of the slab used for producing the grain-oriented electrical steel sheet according to the present invention include at least Si: 2.50 to 4.50% and Mn: 0.01 to 0.15%.

The content of Si (silicon) is 2.50 to 4.50%. Si raises the electrical resistance of steel sheet to thereby decrease the eddy current loss comprising one of the causes of core loss. If the content of Si is less than 2.50%, fully suppressing the eddy current loss of the final grain-oriented electrical steel sheet becomes difficult, so this is not preferable. If the content of Si is more than 4.50%, the workability of the grain-oriented electrical steel sheet falls, so this is not preferable. Therefore, the content of Si is 2.50% to 4.50%, preferably 2.70 to 4.00%.

The content of Mn (manganese) is 0.01 to 0.15%. Mn forms the inhibitors MnS, MnSe, etc. affecting the secondary recrystallization. If the content of Mn is less than 0.01%, the absolute amounts of the MnS and MnSe causing secondary recrystallization become insufficient, so this is not preferable. If the content of Mn is more than 0.15%, at the time of slab heating, dissolution of Mn becomes difficult, so this is not preferable. Further, if the content of Mn is more than 0.15%, the precipitated size of the inhibitors MnS and MnSe easily becomes coarser and the optimal size distribution as inhibitors is harmed, so this is not preferable. Therefore, the content of Mn is 0.01 to 0.15%, preferably 0.03 to 0.13%.

The constituents other than Si and Mn can be made the following:

For example, as constituents other than Si and Mn, the steel may contain, by mass%, C: 0.020 to 0.100%, a total of one or both of S and Se: 0.001 to 0.050%, acid soluble Al: 0.010 to 0.050%, N: 0.002 to 0.015%, Cr: 0.30% or less, Cu: 0.400% or less, P: 0.500% or less, Sn: 0.300% or less, Sb: 0.300% or less, Ni: 1.000% or less, and Bi: 0.020% or less.

The content of C (carbon) is 0.020 to 0.100%. C has many roles, but if the content of C is less than 0.020%, at the time of slab heating, the crystal grain size becomes excessively large whereby the core loss value of the final grain-oriented electrical steel sheet is made to increase, so this is not preferable. If the content of C is more than 0.100%, at the time of decarburization after cold rolling, the decarburization time will become long and the production costs will increase, so this is not preferable. Further, if the content of C is more than 0.100%, the decarburization easily becomes incomplete and there is a possibility that magnetic aging will be caused in the final grain-oriented electrical steel sheet, so this is not preferable. Therefore, the content of C is 0.020 to 0.100%, preferably 0.050 to 0.090%.

The contents of S (sulfur) and Se (selenium) are a total of 0.001 to 0.050%. S and Se form inhibitors together with the above-mentioned Mn. S and Se both may be contained in the slab, but just one of either of them need only be contained.

If the total of the contents of S and Se is outside the above range, a sufficient inhibitor effect cannot be obtained, so this is not preferable. Therefore, the contents of S and Se are a total of 0.001 to 0.050%, preferably 0.001 to 0.040%.

The content of the acid soluble Al (acid soluble aluminum) is 0.010 to 0.050%. The acid soluble Al forms an inhibitor required for production of high magnetic flux density grain-oriented electrical steel sheet. If the content of the acid soluble Al is less than 0.010%, the acid soluble Al becomes insufficient in amount and the inhibitor strength becomes insufficient, so this is not preferable. If the content of the acid soluble Al is more than 0.050%, the AlN precipitating as an inhibitor coarsens and the inhibitor strength is made to fall, so this is not preferable. Therefore, the content of the acid soluble Al is 0.010 to 0.050%, preferably is 0.010 to 0.040%.

The content of N (nitrogen) is 0.002 to 0.015%. N forms the inhibitor AlN together with the above-mentioned acid soluble Al. If the content of N is outside the above range, a sufficient inhibitor effect is not obtained, so this is not preferable. Therefore, the content of N is 0.002 to 0.015%, preferably 0.002 to 0.012%.

Further, the slab used for production of the grain-oriented electrical steel sheet according to the present embodiment may contain one or more elements selected from the group comprising, by mass%, Cu: 0.400% or less, P: 0.500% or less, Sn: 0.300% or less, Sb: 0.300% or less, Ni: 1.000% or less, S: 0.025% or less, Se: 0.025% or less, or Bi: 0.020% or less to improve the magnetic properties in addition to the elements explained above in place of part of the balance of Fe. In a slab according to one aspect, by mass%, the content of Cr may be 0.02% or more, the content of Bi may be 0.0005% or more, the content of Sb may be 0.005% or more, the content of Se may be 0.001% or more, and the content of Mo may be 0.005% or more.

The molten steel adjusted to the chemical composition explained above is cast to obtain a slab. It should be noted that the method of casting the slab is not particularly limited. Further, in R&D, even if a steel ingot is formed by a vacuum melting furnace, etc., similar effects as the case where a slab is formed can be confirmed for the above composition.

[Step of Obtaining Hot Rolled Steel Sheet]

The cast slab is heated at a predetermined temperature. The heated slab is hot rolled and worked into hot rolled steel sheet. The thickness of the worked hot rolled steel sheet may, for example, be 1.8 mm to 3.5 mm. If the thickness of the hot rolled steel sheet is less than 1.8 mm, the steel sheet temperature after the hot rolling becomes lower and the amount of precipitation of AlN in the steel sheet increases, so the secondary recrystallization becomes unstable and in grain-oriented electrical steel sheet of a final thickness of 0.23 mm or less, the magnetic properties fall, so this is not preferable. If the thickness of the hot rolled steel sheet is more than 3.5 mm, the rolling load in the step of cold rolling becomes greater, so this is not preferable.

[Pickling Step]

Next, the hot rolled steel sheet is pickled or the hot rolled steel sheet is annealed to obtain hot rolled annealed sheet, then that hot rolled annealed sheet is pickled.

The pickling solution contains one or more of Cu, Hg, Ag, Pb, Cd, Co, Zn, and Ni in a total of the concentrations of the elements of 0.0001 to 0.1000 mass% with respect to the pickling solution and has a pH of -1 or more and 5 or less. The temperature of the pickling solution is 15°C or more and 100°C or less while the time during which the steel sheet is dipped in the pickling solution is 5 seconds or more and 200 seconds or less.

If the total of the concentrations of the one or more elements of Cu, Hg, Ag, Pb, Cd, Co, Zn, and Ni in the pickling solution is less than 0.0001 mass% with respect to the pickling solution, the effect of control of the inhibitor in the sheet thickness direction (replacement or coating of MnS, etc. by CuS, etc.) becomes insufficient, so this is not preferable. If the total of the concentrations of the one or more elements of Cu, Hg, Ag, Pb, Cd, Co, Zn, and Ni in the pickling solution is more than 0.1000 mass% with respect to the pickling solution, the effect of improvement of the magnetic properties becomes saturated plus the cost of the pickling solution increases, so this is not preferable. Therefore, the total of the concentrations of the one or more elements of Cu, Hg, Ag, Pb, Cd, Co, Zn, and Ni in the pickling solution is 0.0001 to 0.1000 mass% with respect to the pickling solution.

If the pH of the pickling solution is less than -1, the acidity becomes too strong and handling of the pickling solution becomes difficult, so this is not preferable. If the pH of the pickling solution is more than 5, the effect of inhibitor control in the sheet thickness direction due to the pickling becomes insufficient, so this is not preferable. Therefore, the pH of the pickling solution is -1 or more and 5 or less.

If the temperature of the pickling solution is less than 15°C, the effect of inhibitor control in the sheet thickness direction due to the pickling becomes insufficient, so this is not preferable. If the temperature of the pickling solution is more than 100°C, handling of the pickling solution becomes difficult, so this is not preferable. Therefore, the temperature of the pickling solution is 15°C or more and 100°C or less.

If the time period during which the steel sheet is dipped in the pickling solution in the pickling is less than 5 seconds, the effect of inhibitor control in the sheet thickness direction due to the pickling becomes insufficient, so this is not preferable. If the time period during which the steel sheet is dipped in the pickling solution in the pickling is more than 200 seconds, the equipment becomes large, so this is not preferable. Therefore, the time period during which the steel sheet is dipped in the pickling solution in the pickling is 5 seconds or more and 200 seconds or less.

In the case of pickling the steel sheet under the above-mentioned conditions, the precipitates MnS, etc. in the steel are replaced by CuS, etc. or coated by Cu, etc. at the steel sheet surface layer, whereby the heat transfer coefficient of the steel sheet surface layer containing the precipitates becomes constant. "Replaced" means the Mn part of the MnS, etc. originally formed is replaced by Cu, etc. derived from the pickling solution and the MnS, etc. is replaced with CuS, etc. Further, "coated" means Cu, etc. derived from the pickling solution newly precipitates in the surroundings of the MnS originally formed. Such phenomena in the present invention are not affected by the method of precipitation of Cu, etc., so either the phenomenon of replacement of MnS, etc. by CuS, etc. or coating by Cu, etc. may arise at the time of pickling. Due to this, it is possible to make the effect of transfer of the heat due to the lasering, etc. constant at the steel sheet surface layer. Only the heat transfer coefficient of the surface layer is made even by pickling under the above-mentioned conditions, so the Sa of the side surfaces of the groove inside part close to the surface layer is reduced. As opposed to this, the Mn part of the precipitates MnS, etc. near the bottom surface of the groove inside part away from the surface layer is not replaced or coated by metal (Cu, etc.) in the pickling solution. Therefore, the heat transfer coefficient is not made uniform and the Sa of the bottom surface of the groove inside part is not reduced compared with the Sa of the side surfaces of the groove inside part. In this way, if MnS, etc. is not sufficiently replaced by CuS, etc. or not coated by Cu, etc. in the pickling, the heat transfer coefficient will greatly vary and the Sa of the bottom surface of the groove inside part will become larger. On the other hand, even in the case of making the pickling time or the pickling solution concentration a certain level or more, the effect of making the heat transfer coefficient constant becomes saturated and the effect of making the heat transfer coefficient in the depth direction constant is not obtained, there is no further reduction of the side surface Sa of the groove inside part, and the Sa of the bottom surface of the groove inside part also does not change.

[Step of Forming Cold Rolled Steel Sheet]

After the hot rolled steel sheet or hot rolled annealed sheet is pickled, it is rolled by one cold rolling or several cold rolling operations interposed with process annealing so as to work it into cold rolled steel sheet.

Further, the steel sheet may also be heat treated at 300°C or so or less between the cold rolling passes, between rolling roll stands, or during rolling. In such a case, it is possible to improve the magnetic properties of the final grain-oriented electrical steel sheet. It should be noted that, the hot rolled steel sheet may also be rolled by three or more cold rolling operations, but performing cold rolling several times causes the production costs to increase, so the hot rolled steel sheet is preferably rolled by one or two cold rolling operations. In the case of performing the cold rolling by a Sendzimir mill or other reverse rolling, the number of passes at each cold rolling operation is not particularly limited, but nine times or less is preferable from the viewpoint of the production costs.

Above, the steps up to obtaining the cold rolled steel sheet from the slab was explained.

Next, decarburization annealing is performed. The cold rolled steel sheet is heat treated under predetermined temperature conditions (for example, conditions of heating at 700 to 900°C for 1 to 3 minutes) (i.e., decarburization annealing). In the case of performing decarburization annealing, in the cold rolled steel sheet, carbon is reduced to a predetermined amount or less and a primary recrystallization structure is formed. Further, in the decarburization annealing, the surface of the cold rolled steel sheet is formed with an oxide layer containing silica ($SiO_2$) as its main constituent.

Next, the annealing separator is coated. In this step, an annealing separator containing magnesia (MgO) as its main constituent is coated on the surface of the cold rolled steel sheet (surface of oxide layer).

Next, finish annealing is performed. The cold rolled steel sheet on which the annealing separator is coated is heat treated under predetermined temperature conditions (for example, conditions of heating at 1100 to 1300°C or 20 to 24 hours) (i.e., finish annealing). In the case of performing finish annealing, secondary recrystallization occurs at the cold rolled steel sheet and the cold rolled steel sheet is purified. As a result, cold rolled steel sheet having the above-mentioned chemical composition of steel sheet and controlled in crystal orientation so that the axis of easy magnetization of the crystal grains and rolling direction X match is obtained.

Further, if the above such finish annealing is performed, the oxide layer containing silica as its main constituent reacts with the annealing separator containing magnesia as its main constituent whereby the surface of the steel sheet is formed with a glass coating containing forsterite ($Mg_2SiO_4$) or other complex oxide. In the finish annealing step, the finish annealing is performed in the state where the steel sheet is wound into a coil. During the finish annealing, the surface of the steel sheet is formed with a glass coating, whereby it is possible to prevent the occurrence of seizing at the steel sheet wound in a coil.

[Step of Forming Linear Grooves in Steel Sheet Surface]

After this, in the lasering step, the surface of the steel sheet on which the glass coating is formed (one side only) is lasered to form a plurality of grooves in the surface of the steel sheet extending in a direction crossing the rolling direction at a 2 to 10 mm pitch along the rolling direction.

In the lasering step, the lasering apparatus fires a laser beam toward the surface of the steel sheet by driving rotation of a polygon mirror and runs the laser beam in a direction forming a 0 to 30° angle with the direction perpendicular to rolling direction.

At the same time as the lasering, air or an inert gas or other assist gas is blown at the portion of the steel sheet which is lasered. The inert gas is, for example, nitrogen, argon, etc. The assist gas acts to remove the constituents melted or vaporized from the steel sheet due to lasering. By blowing the assist gas, the laser beam reaches the steel sheet without being obstructed by the melted or vaporized constituents, so the grooves are stably formed.

However, assist gas is blown limited to the lasered spots, so the constituents (dust) melted or vaporized from the steel sheet formed at the groove inside part float up by the assist gas and are kept from dwelling at the groove inside part, but redeposition onto the steel sheet, laser, etc. at the outside is hard to prevent. This sometimes causes the surface roughnesses Sa of the bottom surface and side surfaces of the grooves to fluctuate. Sometimes the desired surface roughnesses Sa are not obtained. To prevent such redeposition, blower gas is used for moving the dust removed to outside the grooves further away from the steel sheet. From this viewpoint, it is desirable that the blower gas be blown in a TD direction of the steel sheet (sheet width direction) and a parallel direction to run along the surface of the steel sheet (typically within ±several degrees or within ±10 degrees with respect to the steel sheet surface as 0 degree). Further, air is blown at the lasered surface at the time of lasering using a blower by a flow rate of 100 m/s or more and 200 m/s or less. If 100 m/s or less, the effect of suppression of redeposition is not sufficient, while if it is more than 200 m/s, the air flow causes the steel sheet to end up vibrating. Due to this, grooves having the desired surface roughnesses Sa are formed.

As the laser source, for example, a fiber laser, YAG laser, semiconductor laser, or $CO_2$ laser or other high output laser generally used for industrial purposes can be used. Further, so long as it is possible to stably form the grooves, a pulse laser or continuous wave laser may also be used as the laser source. As the laser, a single mode laser high in focusing ability and suitable for formation of grooves is preferable.

As the lasering conditions, for example, it is preferable to set the laser output to 200W to 3000W and the focused spot size of the laser beam in the rolling direction (i.e., the diameter including 86% of the laser output, below abbreviated as the "86% size") to 10 μm to 200 μm and to set the focused spot size (86% size) of the laser beam in the sheet width direction to 10 μm to 1000 μm and the laser scan speed to 5 m/s to 50 m/s and laser scan pitch (pitch PL) to 2 mm to 10 mm. These lasering conditions are suitably adjusted to give a 10 to 40 μm depth D of the grooves.

In the final insulating coating formation step, the steel sheet surface on which grooves have been formed by the above lasering is for example coated by an insulating coating solution containing colloidal silica and a phosphate from above the glass coating. After that, heat treatment is performed under predetermined temperature conditions (for example, 840 to 920°C), whereby finally grain-oriented electrical steel sheet according to the present invention formed with grooves and provided with a glass coating and an insulating coating is obtained.

The shape of the grooves formed at the obtained grain-oriented electrical steel sheet was measured using the above methods of measurement of the depth D of the grooves, the width W of the grooves, and the surface roughnesses Sa of the bottom surface of the groove inside part and the side surfaces of the groove inside part.

EXAMPLES

Below, examples will be shown while explaining the grain-oriented electrical steel sheet of the present invention more specifically. It should be noted that the examples shown below are just illustrations of the grain-oriented electrical steel sheet according to the embodiments. The grain-oriented electrical steel sheet according to the embodiments is not limited to the examples shown below.

A slab prepared to give grain-oriented electrical steel sheet having a chemical composition containing, by mass%, Si: 3.00%, C: 0.080%, acid soluble Al: 0.050%, N: 0.010%, Mn: 0.12%, Cr: 0.05%, Cu: 0.040%, P: 0.010%, Sn: 0.020%, Sb: 0.010%, Ni: 0.005%, S: 0.007%, and Se: 0.001% and having a balance comprised of Fe and impurities was hot rolled to obtain thickness 2.3 mm hot rolled steel sheet.

Next, the hot rolled steel sheet was annealed under temperature conditions of heating at 1000°C for 1 minute to obtain hot rolled annealed sheet.

The surface of the hot rolled annealed sheet was pickled by the pickling solution and pickling conditions shown below:

The pickling was performed by the constituents and concentrations of the pickling solution, pH value, temperature, and dipping time in the following ranges:

(Constituents and concentrations of the pickling solution) One or more of Cu, Hg, Ag, Pb, Cd, Co, Zn, and Ni are contained in a total of the concentrations of the elements of 0.0001 to 0.1000 mass% with respect to the pickling solution.

    (pH value) -1 or more and 5 or less
    (Temperature) 15°C or more and 100°C or less
    (Dipping time) 5 seconds or more and 200 seconds or less

After the pickling, the steel sheet was cold rolled to obtain thickness 0.23 mm cold rolled steel sheet. Next, this cold rolled steel sheet was annealed for decarburization under temperature conditions of heating at 800°C for 2 minutes, then an annealing separator containing magnesia (MgO) as a main constituent was coated on the surface of the cold rolled steel sheet.

Next, the cold rolled steel sheet on which the annealing separator was coated was finish annealed under temperature conditions of heating at 1200°C for 20 hours. As a result, steel sheet with a glass coating formed on the surface having the above-mentioned chemical composition and controlled in crystal orientation so that the axis of easy magnetization of the crystal grains and the rolling direction matched was obtained.

Next, the surface of the steel sheet on which the glass coating was formed was lasered to form a plurality of grooves extending in a direction crossing the rolling direction at a predetermined pitch along the rolling direction.

The lasering conditions were set to give the desired depth D of the grooves by adjusting the laser output to 200W to 3000W in range, the focused spot size of the laser beam in the rolling direction ("86% size") to 10 $\mu$m to 500 $\mu$m in range, the focused spot size (86% size) of the laser beam in the sheet width direction to 10 $\mu$m to 1000 $\mu$m in range, the laser scan speed to 5 m/s to 50 m/s, and the laser scan pitch (pitch PL) to 2 mm to 10 mm.

In the invention examples, when lasering the steel sheet, the lasered surface of the steel sheet was blown with air using a blower in the TD direction (sheet width direction) of the steel sheet and a direction parallel to the steel sheet surface at a 100 m/s or more air speed so that the constituents melted or vaporized from the steel sheet due to the lasering floated up and could be kept from redepositing on the steel sheet, laser, etc.

As explained above, the steel sheet on which grooves were formed was coated from above the glass coating with an insulating coating solution containing colloidal silica and a phosphate, then was heat treated under temperature conditions of heating at 850°C for 1 minute to finally obtain grain-oriented electrical steel sheet on which grooves were formed and provided with a glass coating and an insulating coating.

In the comparative examples, when lasering the steel sheets, the lasered surfaces of the steel sheets were not blown upon using a blower to blow air against the lasered parts and their vicinities. Further, the pickling conditions were outside the above range.

Regarding the shapes of the grooves formed, the measurement methods explained above were used to measure the depth D of the grooves, the width W of the grooves, and the surface roughnesses Sa of the bottom surfaces of the groove inside parts and the side surfaces of the groove inside parts. The measurement results are shown in Table 1 along with the linear roughnesses Ra and core losses W17/50. It should be noted that a good core loss W17/50 was deemed 0.75 (W/kg) or less. Examples satisfying this criteria were indicated as "G (Good)." In particular, examples with a low core loss of 0.73 (W/kg) or less were indicated as E (Excellent). The core loss was measured based on JIS C2556: 2015.

In noise measurement, a width 100 mm×length 500 mm sample was taken from each grain-oriented electrical steel sheet. The length direction of the sample corresponded to the rolling direction RD, while the width direction corresponded to the transverse direction TD.

Each sample was measured for magnetostriction by the AC magnetostriction measurement method using a magnetostriction measurement device. The magnetostriction measurement device was made a device provided with a laser doppler vibration meter, excitation coil, excitation power source, magnetic flux detection coil, amplifier, and oscilloscope.

Specifically, an AC magnetic field was applied to the sample so that in the rolling direction, the maximum magnetic flux became 1.7T and the frequency became 50Hz. The change in the length of the sample due to stretching and contraction of the domains was measured by the laser doppler vibration meter whereby a magnetostriction signal was obtained. The obtained magnetostriction signal was analyzed by Fourier analysis to find the amplitudes Cn of the frequency components fn of the magnetostriction signal ("n" is a natural number of 1 or more). The A correction coefficient $\alpha$n of the frequency components fn was used to find the noise property (dB) shown in the following formula:

$$\text{Noise property} = 20 \times \text{Log}(\sqrt{(\Sigma(\rho c \times 2\pi \times fn \times \alpha n \times Cn / \sqrt{2})2)}) / Pe0)$$

where, $\rho$c is the specific acoustic resistance. pc=400. Pe0 is minimum audible sound pressure. Pe0=2×10-5(Pa) was used. For the A correction coefficient $\alpha$n, the value described in Table 2 of JIS C 1509-1(2017) was used. $\Sigma$ was 10 points in 100Hz increments of the frequency components 100 to 1000Hz.

The measurement results are shown in Table 1 along with the core loss W17/50 and noise (dB). It should be noted that, regarding the noise property, 50 dBA or less was deemed a good noise property. Examples satisfying this criteria were indicated as "G (Good)."

[Table 1]

| | Width W of grooves (μm) | Depth D of grooves (μm) | Ra of bottom surface of groove inside part (μm) | Sa of bottom surface of groove inside part (μm) | Ra of side surfaces of groove inside part (μm) | Sa of side surfaces of groove inside part (μm) | Core loss (W/kg) | Core loss 0.75 or less | Noise (dBA) | Noise 50 or less |
|---|---|---|---|---|---|---|---|---|---|---|
| Comp. Ex. 1 | 38 | 19 | 2.9 | 3.6 | 5.9 | 5.2 | 0.759 | | 49 | G (Good) |
| Comp. Ex. 2 | 37 | 18 | 5.3 | 4.2 | 4.1 | 5.1 | 0.759 | | 48 | G (Good) |
| Comp. Ex. 3 | 40 | 21 | 2.2 | 3.5 | 6.1 | 4.6 | 0.729 | E (Excellent) | 53 | |
| Comp. Ex. 4 | 40 | 20 | 3.0 | 3.1 | 5.6 | 3.1 | 0.728 | E (Excellent) | 52 | |
| Comp. Ex. 5 | 38 | 19 | 3.3 | 3.5 | 2.4 | 3.4 | 0.724 | E (Excellent) | 53 | |
| Comp. Ex. 6 | 41 | 21 | 6.1 | 4.1 | 2.6 | 3.5 | 0.726 | E (Excellent) | 52 | |
| Comp. Ex. 7 | 41 | 22 | 5.6 | 6.1 | 4.5 | 5.3 | 0.765 | | 49 | G (Good) |
| Comp. Ex. 8 | 40 | 19 | 4.8 | 5.3 | 3.6 | 5.1 | 0.762 | | 47 | G (Good) |
| Comp. Ex. 9 | 40 | 21 | 2.9 | 5.1 | 1.8 | 5.4 | 0.764 | | 49 | G (Good) |
| Comp. Ex. 10 | 39 | 18 | 5.3 | 5.7 | 5.1 | 6.1 | 0.765 | | 48 | G (Good) |
| Comp. Ex. 11 | 41 | 20 | 6.2 | 5.3 | 5.9 | 5.8 | 0.763 | | 49 | G (Good) |
| Inv. Ex. 1 | 42 | 20 | 3.3 | 5.1 | 2.3 | 2.5 | 0.735 | G (Good) | 49 | G (Good) |
| Inv. Ex. 2 | 38 | 22 | 2.9 | 5.6 | 1.4 | 2.5 | 0.736 | G (Good) | 48 | G (Good) |
| Inv. Ex. 3 | 36 | 21 | 1.5 | 5.4 | 1.2 | 3.1 | 0.742 | G (Good) | 48 | G (Good) |
| Inv. Ex. 4 | 40 | 21 | 5.3 | 5.1 | 2.3 | 2.5 | 0.735 | G (Good) | 50 | G (Good) |
| Inv. Ex. 5 | 38 | 21 | 3.2 | 5.3 | 6.1 | 3.4 | 0.745 | G (Good) | 49 | G (Good) |
| Inv. Ex. 6 | 38 | 19 | 6.1 | 6.3 | 1.6 | 2.0 | 0.733 | G (Good) | 46 | G (Good) |
| Inv. Ex. 7 | 39 | 18 | 5.4 | 5.6 | 3.2 | 4.7 | 0.749 | G (Good) | 47 | G (Good) |

(continued)

| | Width W of grooves ($\mu$m) | Depth D of grooves ($\mu$m) | Ra of bottom surface of groove inside part ($\mu$m) | Sa of bottom surface of groove inside part ($\mu$m) | Ra of side surfaces of groove inside part ($\mu$m) | Sa of side surfaces of groove inside part ($\mu$m) | Core loss (W/kg) | Core loss 0.75 or less | Noise (dBA) | Noise 50 or less |
|---|---|---|---|---|---|---|---|---|---|---|
| Inv. Ex. 8 | 42 | 20 | 3.6 | 5.5 | 5.1 | 3.7 | 0.748 | G (Good) | 48 | G (Good) |

From the results, it is learned that in the examples (invention example), by performing pickling, the Sa values of the surface roughnesses of the bottom surfaces of the groove inside parts and the side surfaces of the groove inside parts are controlled to within certain ranges and the noise is decreased over the comparative examples without detracting from the excellent core loss.

## Claims

1.  Grain-oriented electrical steel sheet comprised of steel sheet containing, by mass%, Si: 2.50 to 4.50% and Mn: 0.01 to 0.15% and having a balance of Fe and impurities and having a steel sheet surface on which linear grooves extending in a direction forming a 0 to 30° angle with a direction perpendicular to rolling direction are formed at a 2 to 10 mm pitch,

    in which grain-oriented electrical steel sheet,
    a depth D of the grooves is 10 to 40 $\mu$m,
    a width W of the grooves is 20 to 200 $\mu$m,
    an $Sa_{bottom}$ value of surface roughness of a bottom surface of a groove inside part is more than 5.0 $\mu$m, and
    an $Sa_{side}$ value of surface roughnesses of side surfaces of the groove inside part is 1.0 to 5.0 $\mu$m.

# Fig. 1

INSULATION COATING

GLASS COATING

BASE IRON

d/2   w   (A)

d

INSULATION COATING

GLASS COATING

BASE IRON

d'/2   w'   (B)

d'

## INTERNATIONAL SEARCH REPORT

<table>
<tr><td>International application No.</td></tr>
<tr><td>**PCT/JP2023/041949**</td></tr>
</table>

**A. CLASSIFICATION OF SUBJECT MATTER**

*C22C 38/00*(2006.01)i; *C21D 8/12*(2006.01)i; *C22C 38/04*(2006.01)i; *C22C 38/60*(2006.01)i; *H01F 1/147*(2006.01)i
FI: C22C38/00 303U; C22C38/04; C22C38/60; C21D8/12 D; H01F1/147 183

According to International Patent Classification (IPC) or to both national classification and IPC

**B. FIELDS SEARCHED**

Minimum documentation searched (classification system followed by classification symbols)

C22C38/00-38/60; C21D8/12; C21D9/46; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-22490 A (NIPPON STEEL CORP) 07 February 2022 (2022-02-07) claims, paragraphs [0046]-[0064] | 1 |
| A | WO 2016/171124 A1 (NIPPON STEEL & SUMITOMO METAL CORP) 27 October 2016 (2016-10-27) claims, paragraphs [0081]-[0085] | 1 |
| A | JP 2007-2334 A (NIPPON STEEL CORP) 11 January 2007 (2007-01-11) claims, paragraph [0013] | 1 |
| A | JP 2022-22494 A (NIPPON STEEL CORP) 07 February 2022 (2022-02-07) claims, paragraphs [0042]-[0061] | 1 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 January 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 624 609 A1**

## INTERNATIONAL SEARCH REPORT
### Information on patent family members

International application No.

**PCT/JP2023/041949**

| Patent document cited in search report | | | Publication date (day/month/year) | Patent family member(s) | Publication date (day/month/year) |
|---|---|---|---|---|---|
| JP | 2022-22490 | A | 07 February 2022 | (Family: none) | |
| WO | 2016/171124 | A1 | 27 October 2016 | EP 3287538 A1 claims, paragraphs [0093]-[0097] US 2018/0066334 A1 CN 107406935 A | |
| JP | 2007-2334 | A | 11 January 2007 | WO 2006/120985 A1 claims, paragraph [0013] US 2009/0145526 A1 CN 101171651 A | |
| JP | 2022-22494 | A | 07 February 2022 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1198429 A

- WO 2016171130 A